# EUROPEAN PATENT APPLICATION

(11) **EP 2 072 929 A1**
(43) Date of publication of application: **24.06.2009**
(21) Application number: 07828275.3
(22) Date of filing: 20.09.2007
(51) Int. Cl.: F24F 13/28, B01D 46/10

(54) **AIR CONDITIONER**

(30) Priority: 25.09.2006 JP 2006259237
(71) Applicant: Daikin Industries, Ltd., Osaka-shi, Osaka 530-8323 (JP)
(72) Inventor: TAKADA, Yohei, Kusatsu-shi, Shiga; 525-8526 (JP)
(74) Representative: Siegert, Georg
(86) International application number: PCT/JP2007/068280
(87) International publication number: WO 2008/038570

(57) **Abstract**

An object of the present invention is to allow smooth movement of a filter by preventing the filter from getting caught during its movement. A cleaning mechanism of an air conditioner of this invention removes dust adhering to the surface of a sheet-like filter (13) arranged capable of moving along the inner surface of a suction port by moving the filter from a position where a specific filter function is demonstrated. Then, the cleaning mechanism returns the filter (13) to the position where the specific filter function is demonstrated. In addition, a filter pusher (43) that guides the movement of the filter (13) is provided with catch prevention members (R) that guide both side portions of each filter function unit of the filter (13) in the filter moving direction.

## Description

### TECHNICAL FIELD

The present invention relates to an air conditioner. More specifically, the present invention relates to an air conditioner equipped with a filter cleaning mechanism that cleans a filter by moving the filter.

### BACKGROUND ART

An air conditioner equipped with a cleaning mechanism that automatically cleans a filter has been conventionally known. For example, as disclosed in Japanese Patent Application Publication No. 2004-101101, a filter cleaning mechanism of an air conditioner having a configuration as described above includes a sheet-like filter disposed so as to be able to freely reciprocate along the inner surface of an air suction port; a dust box disposed in a reciprocating path of the filter; and a brush disposed so as to sandwich the filter from both front and back surfaces thereof in the dust box. Additionally, dust adhering to the surface of the filter that reciprocates in the dust box is wiped off with a brush so as to reproduce the function of the filter.

### DISCLOSURE OF THE INVENTION

### <OBJECT TO BE ACHIEVED BY THE INVENTION>

In the case of the filter cleaning mechanism of the air conditioner as described above, dust adhering to the surface of the filter is removed with a brush in the process of reciprocating the filter, so that a problem described below may occur during movement of the filter.

For example, in the case where the filter cleaning mechanism is configured such that the filter is latched in annular belts wound between pairs of pulleys and the filter is reciprocated along with the reciprocative rotation of the annular belt, when the filter is bent and rotated 180 degrees or so, the filter may sag and get caught by a filter guide. When that happens, the filter cannot be smoothly moved.

The present invention is made in light of the above problem, and aims to allow smooth movement of a filter by preventing the filter from getting caught during rotation of the filter.

### <MEANS TO ACHIEVE THE OBJECT>

An air conditioner according to the present invention includes an air conditioning mechanism, a cleaning mechanism, and a filter guide. The air conditioning mechanism includes a heat exchanger and a fan disposed in a ventilation passage. The ventilation passage is an air passage extending from a suction port, which is formed across the area from the front side of the casing to the upper side thereof, to a discharge port formed at the bottom side of the casing. The cleaning mechanism removes dust adhering to the surface of a sheet-like filter arranged capable of moving along the suction port by moving the filter from a position where a specific filter function is demonstrated, and after the removal of dust, the cleaning mechanism returns the filter to the position where the specific filter function is demonstrated. The filter guide guides the movement of the filter. The filter includes a filter member and support portions that support the filter member. Additionally, one or a plurality of filter function units, each of which being the filter member surrounded by the support portions, are formed to the filter. The filter guide is provided with a catch prevention member that guides both side portions of the filter function unit in the filter moving direction.

Because of the structure described above, sagging of the center portion of the filter function unit in the filter moving direction is corrected as the both side portions of the filter function unit in the filter moving direction are guided by the catch prevention member during movement of the filter, which consequently allows smooth movement of the filter.

In addition to this, if the filter guide is configured such that the filter guide is provided with a guide portion that allows the both side portions of the filter function unit in the filter moving direction to be guided before the center portion of the filter function unit in the filter moving direction and such that the catch prevention member is a part of the guide portion, the filter guide can be made small and the center portion of the filter function unit in the filter moving direction can be further reliably corrected. In addition, in such a case, the catch prevention member preferably has a curved surface and the guide portion preferably has a U-shaped surface including the curved surface of the catch prevention member.

In addition, also in the case where the filter guide is configured such that the filter guide includes a plurality of guide portions arranged along the filter moving direction and such that the catch prevention member comprises bars that extend in a direction crossing the filter moving direction so as to connect the plurality of guide portions, sagging of the center portion of the filter function unit in the filter moving direction can be further reliably corrected. Also in this case, an ingenious modification of the structure of the bars provided to the filter guide can produce effects such as a reduction of the size of the filter guide and smooth movement of the filter.

### <EFFECT OF THE INVENTION>

According to the present invention, sagging of the center portion of a filter function unit in a filter moving direction during rotation of a filter is corrected, which consequently allows smooth movement of the filter.

### BRIEF DESCRIPTION OF THE DRAWINGS

Figure 1 is a perspective view of an external appearance of an air conditioner according to an embodiment of the present invention.
Figure 2 is an enlarged cross sectional view of Figure 1 taken along line II-II.
Figure 3 is a perspective view of the air conditioner with a casing removed.
Figure 4 is an enlarged perspective view of a filter used in the air conditioner.
Figure 5 is an enlarged perspective view of main parts of a cleaning mechanism of the air conditioner.
Figure 6 is an enlarged front view of a pulley used in the cleaning mechanism.
Figure 7 is an enlarged cross sectional view of Figure 2 taken along line VII.
Figure 8 is a front view of a filter guide in the air conditioner.
Figure 9A is a front view of main parts of a filter pusher having bars as a hexagonal shaped catch prevention member according to an alternative embodiment 1.
Figure 9B is a front view of main parts of a filter pusher having bars as an oblique shaped catch prevention member according to an alternative embodiment 2.
Figure 10A is a front view of a filter for the filter pusher according to the alternative embodiment 1.
Figure 10B is a front view of a filter for the filter pusher according to the alternative embodiment 2.

### EXPLANATION OF THE REFERENCE SYMBOLS

- 1: Casing
- 3: Suction port
- 3A: Front suction port
- 3B: Top side suction port
- 4: Discharge port
- 5: Ventilation passage
- 7: Heat exchanger
- 8: Fan
- 13: Filter
- 14: Cleaning unit casing including a filter pusher
- 17: Bar
- 25A: Side frames of the filter
- 25B: Front and back frames of the filter
- 26: Grille bar of the filter
- 27: Filter member
- 27A: Both side portions of each filter function unit in the filter moving direction
- 27B: Center portion of each filter function unit in the filter moving direction
- 43: Filter pusher as a filter guide
- 43A: Left-right guide portion
- 43B: Front-back guide portion
- R: Catch prevention member
- X: Air conditioning mechanism
- Y: Cleaning mechanism

### BEST MODE FOR CARRYING OUT THE INVENTION

### <ENTIRE STRUCTURE OF INDOOR UNIT OF AIR CONDITIONER>

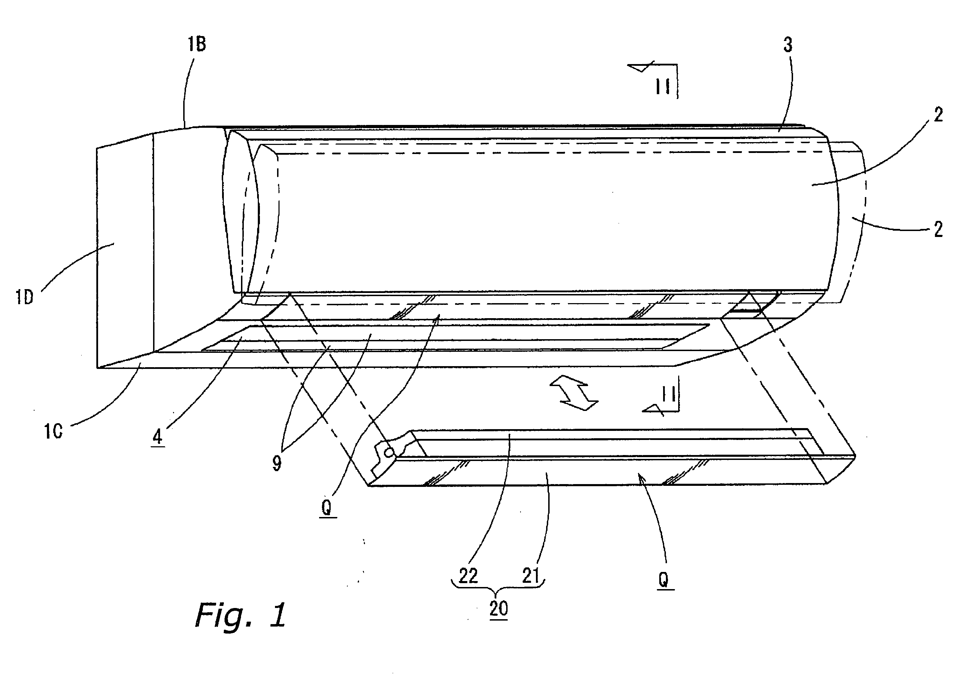

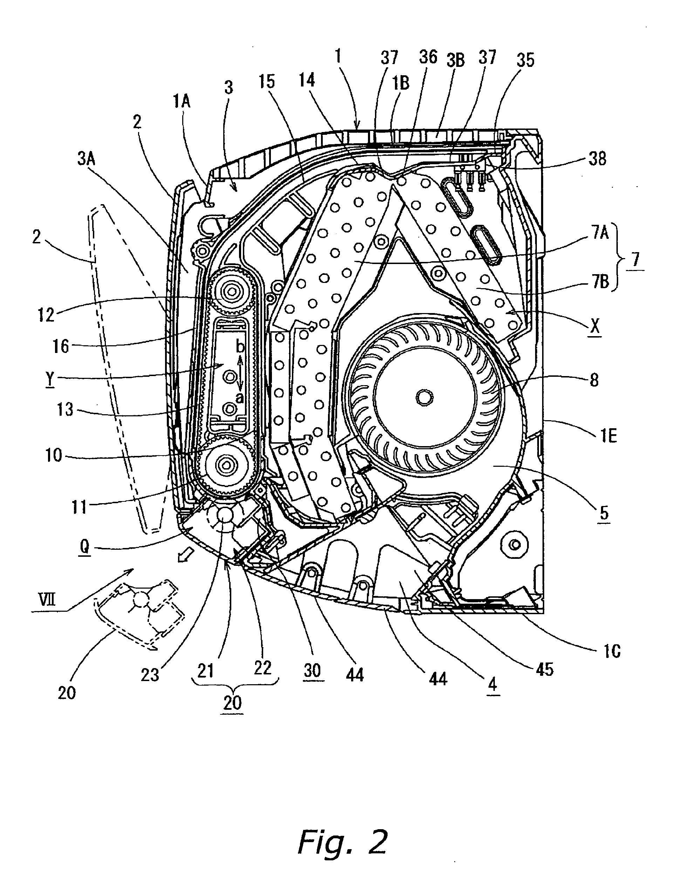

An air conditioner according to an embodiment of the present invention is a separate type air conditioner. An indoor unit of the air conditioner is shown in Figures 1 and 2. This indoor unit includes a horizontally elongated box-shaped casing 1 attached to the indoor wall surface. The casing 1 includes a front side suction port 3A formed in a front wall 1A, and an upper side suction port 3B formed in a top wall 1B.

In addition, a front panel 2 is provided in front of the front side suction port 3A. The front panel 2 moves downward from a closed position where the front panel 2 is near the front side suction port 3A and covers the front side suction port 3A as shown by the solid lines in Figures 1 and 2, to an open position where the front panel 2 is forwardly inclined with its upper end sticking out forward as shown by the two-dot chain lines in Figures 1 and 2. In this way, the front panel 2 is configured to be able to open and close the front side suction port 3A between the open position and the closed position, and to open the front side suction port 3A at the open position.

In addition, a discharge port 4 having a horizontally elongated opening shape is disposed at the middle portion in the front and back direction of a bottom wall 1C of the casing 1. The discharge port 4 is disposed with a horizontal flap 44 and a vertical flap 45.

Further, a brush mechanism Q (described below) having a dust box 20 is removably mounted in a housing 30. In the casing 1, the housing 30 is disposed at a position in front of the discharge port 4 and near the lower end of the front wall 1A.

Additionally, as shown in Figure 2, in the casing 1, a heat exchanger 7 and a fan 8 are disposed in a ventilation passage 5 formed from a suction port 3 (i.e., the front side suction port 3A and the upper side suction port 3B) to the discharge port 4. An air conditioning mechanism X is formed by the heat exchanger 7 and the fan 8. The heat exchanger 7 is formed by a first heat exchanger 7A facing the suction port 3 (mainly, the front side suction port 3A) with a space therefrom and extending in the up-down direction, and a second heat exchanger 7B connected to the upper end of the first heat exchanger 7A and inclined downward to a back wall 1D side. The heat exchanger 7 is in a bent form having a substantially mountain shape.

### <STRUCTURES OF CLEANING MECHANISM, CLEANING UNIT CASING, AND FILTER>

In the casing 1, there are a front space formed between the front side suction port 3A and the front side of the first heat exchanger 7A, and an upper space formed between the upper side suction port 3B and the top portions of the first heat exchanger 7A and the second heat exchanger 7B. A filter 13, a cleaning unit casing 14, a cleaning mechanism Y, and the like are disposed across these spaces.

### (FILTER)

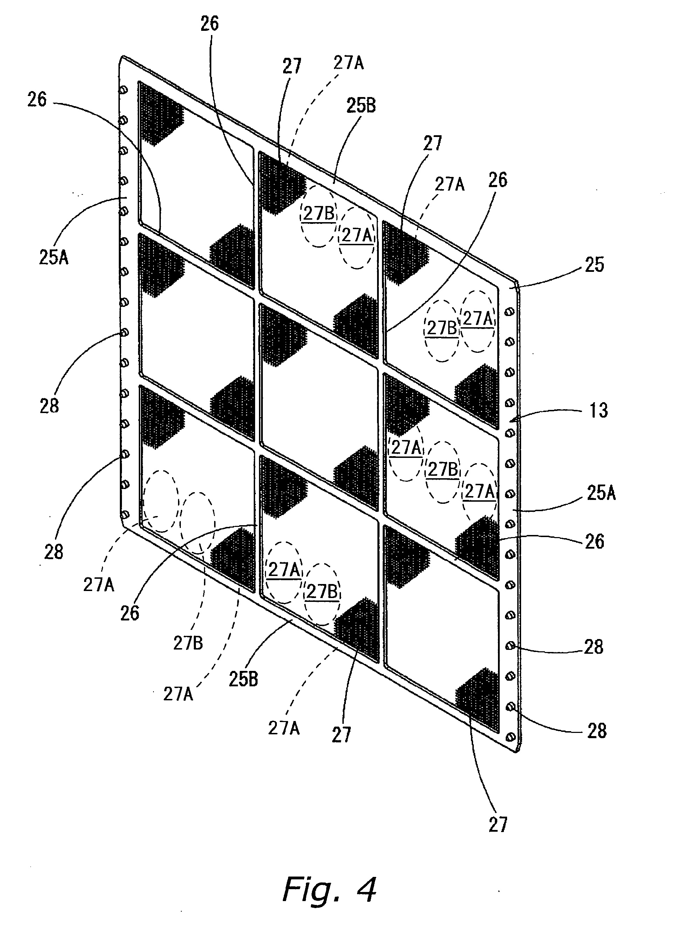

As shown in Figure 4, the filter 13 is a flexible sheet-like filter, and includes a rectangular frame body 25, grille bars 26, and a filter member 27. As described below, the filter 13 is guided by the cleaning unit casing 14 that includes guide grooves 15a and 16a and a filter pusher 43 (described below) such that the filter 13 can reciprocate between a "first filter position" near the suction port 3 and a "second filter position" nearer the heat exchanger 7 than the suction port 3.

The frame body 25 of the filter 13 is formed by side frames 25A positioned at both sides of the frame body 25 in the filter moving direction (i.e., both left and right sides in the front view) and front and back frames 25B positioned at the front and back of the frame body 25 in the filter moving direction. As shown in Figure 4, the grille bars 26 connect each of the frames 25A and 25B and are integrally formed with the frame body 25. The filter member 27 is disposed in a quadrangular shaped section surrounded by the frame body 25 and the grille bars 26. The frame body 25 and the grille bars 26 act as the support portions for supporting the filter member 27. The filter 13 shown in Figure 4 has nine sections each formed by the filter member 27 whose surrounding four sides are supported by the frame body 25 and the grille bars 26. Each of these nine sections formed by the filter members 27 is a filter function unit that demonstrates a filter function of collecting dust in the air when the air passes therethrough. The indoor unit of this air conditioner is configured such that the filter 13 is mounted to each of the left and right sides, and each filter 13 has nine filter function units. In the description of this embodiment, portions in each filter function unit which are near the frame body 25 or the grille bars 26 in the left-right direction are referred to as "both side portions 27A in the filter moving direction" and a portion in each filter function unit which is away from the frame body 25 or the grille bars 26 in the left-right direction is referred to as a "center portion 27B in the filter moving direction" (see Figure 4).

In addition, a number of projections 28 arranged at an equal pitch in the filter moving direction are integrally formed with the side frames 25A of the filter 13 so as to project therefrom.

### (CLEANING UNIT CASING)

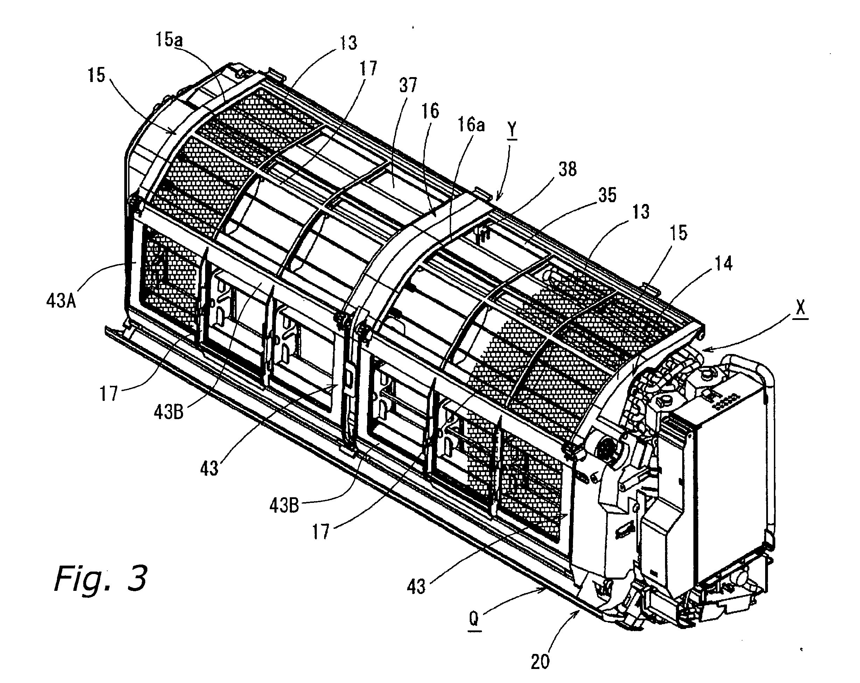

As shown in Figures 2 and 3, when viewed from the side, the cross-section of the cleaning unit casing 14 has a curved shape that follows the longitudinal cross sectional shape from the front side suction port 3A to the upper side suction port 3B of the casing 1. In addition, the cleaning unit casing 14 has a horizontally elongated shape and is fixed to the casing 1. The cleaning unit casing 14 is made of resin, and includes a left and right pair of side wall portions 15, a middle wall portion 16 located between theses side wall portions 15, and a grating shaped bars 17 disposed between the side wall portions 15 and the middle wall portion 16. The side wall portions 15, the middle wall portion 16, and the bars 17 are integrally formed together, and they also play the role of guiding the filter 13. The side wall portions 15 and the middle wall portion 16 of the cleaning unit casing 14 are provided with the guide grooves 15a and 16a, respectively. The filter 13 is arranged between the guide groove 15a of one of the side wall portions 15 and the guide groove 16a of the middle wall portion 16, and also between the guide groove 15a of the other one of the side wall portions 15 and the guide groove 16a of the middle wall portion 16, such that each filter 13 can move along the cross-sectionally curved shape of the cleaning unit casing 14.

In addition, the cleaning unit casing 14 includes the filter pusher 43 that externally covers the front portion (i.e., front side) of the filter 13 disposed at a position facing the front side suction port 3A of the casing 1. The filter pusher 43 plays the role of holding down the filter 13 in place (preventing the film 13 from bulging out forward) during movement of the filter 13. The filter pusher 43 is made of resin, and can rotate about its upper edge portion.

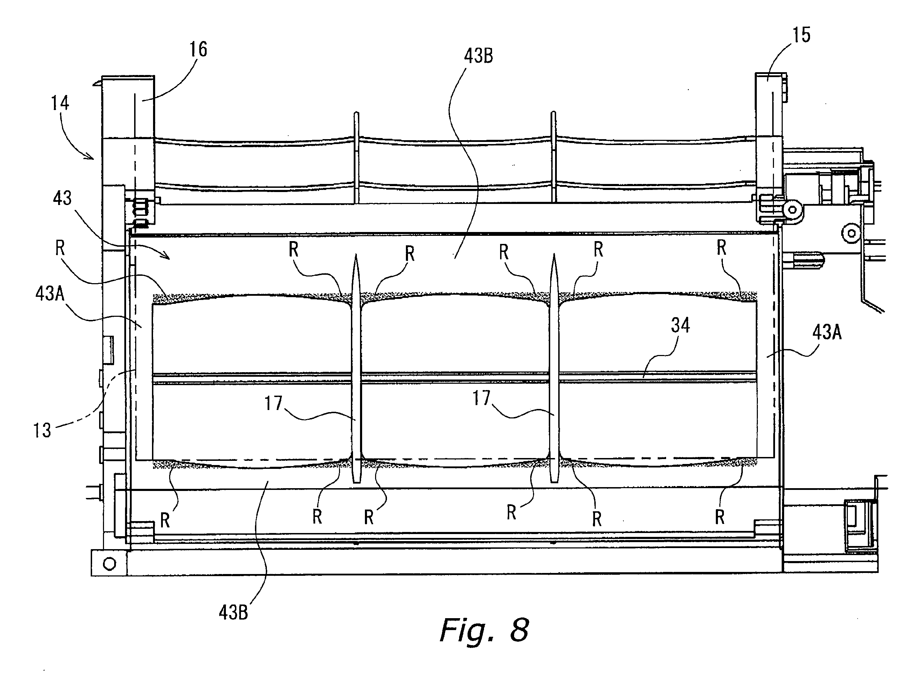

As shown in Figure 3, the filter pusher 43 is provided to each of the left and right sides, and each filter pusher 43 includes left-right guide portions 43A, front-back guide portions 43B, and the bars 17. As shown in Figure 8, the left-right guide portions 43A and the bars 17 extend in the up-down direction, and the front-back guide portions 43B extend in the left-right direction. The left-right guide portions 43A and the bars 17 connect between the upper front-back guide portion 43B and the lower front-back guide portion 43B, and are integrally formed with the front-back guide portions 43B. The left-right guide portions 43A of the filter pusher 43 align with the side wall portions 15 and the middle wall portion 16 described above in the left-right direction. In addition, the positions of the bars 17 of the filter pusher 43 in the left-right direction align with the positions of the forwardly and rearwardly extending portions of the bars 17 in the left-right direction which are integrally formed with the side wall portions 15 and the middle wall portion 16.

As shown in Figure 8, catch prevention members R are formed to each front-back guide portion 43B of the filter pusher 43. In the left-right direction, the left-right guide portions 43A of the filter pusher 43 are located at the same positions as the side frames 25A of the filter 13, and the bars 17 of the filter pusher 43 are located at the same positions as the upwardly and downwardly extending portions of the grille bars 26 of the filter 13. Additionally, in the left-right direction, the catch prevention members R of the front-back guide portions 43B are located at the same position as the both side portions 27A of each filter function unit in the filter moving direction of the filter 13.

As shown in Figure 8, each catch prevention member R has a curved surface. As a result, the front-back guide portions 43B have U-shaped surfaces including the curved surfaces.

Note that, Figure 8 clearly shows the catch prevention members R formed in the front-back guide portions 43B of the filter pusher 43; however, the illustration of the catch prevention members R is omitted in Figure 3.

### (CLEANING MECHANISM Y)

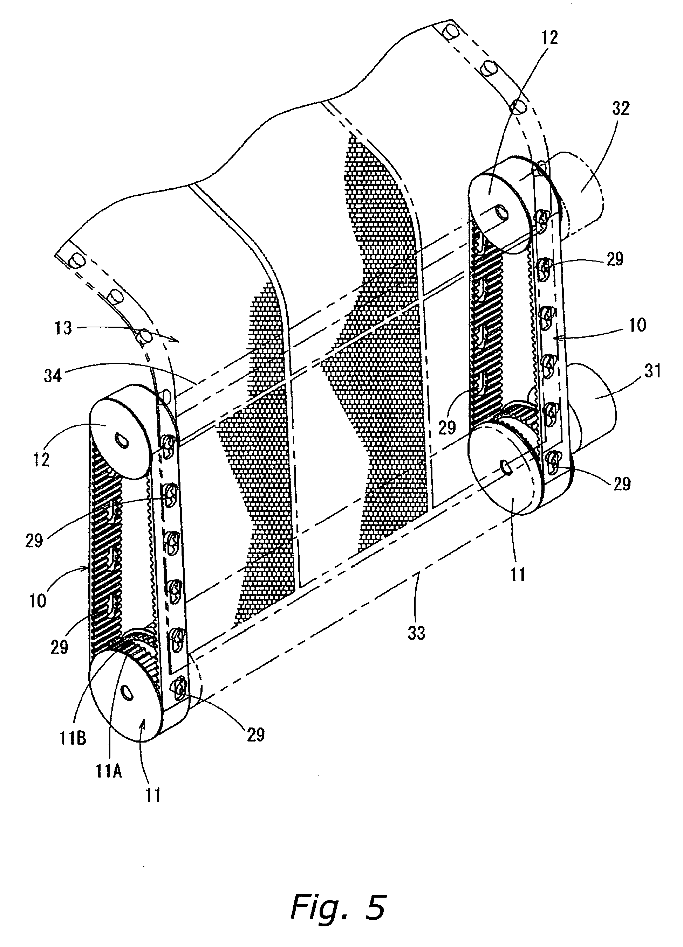

As shown in Figure 5, a number of projections 28 on the side frames 25A of the filter 13 are latched in annular belts 10 at the front portion (a portion facing the front side suction port 3A) of the cleaning unit casing 14. The annular belts 10 are wound between first pulleys 11 and second pulleys 12 arranged in a parallel manner with a space therebetween in the up-down direction. The filter 13 is latched in the annular belts 10 as the projections 28 of the filter 13 are engaged with a number of engaging holes 29 formed side-by-side at an equal pitch on each annular belt 10. Thereby, the filter 13 moves as the annular belts 10 run.

It is preferable that each engaging hole 29 of the annular belts 10 be formed in an oval shape having a long axis in the filter moving direction. It is because such a shape provides greater flexibility when engaging the projections 28 with the engaging holes 29. In addition, it is preferable that the space between each engaging hole 29 be equal to the space between each projection 28, however, the space between each projection 28 may be equal to the integral multiple of the space between each engaging hole 29.

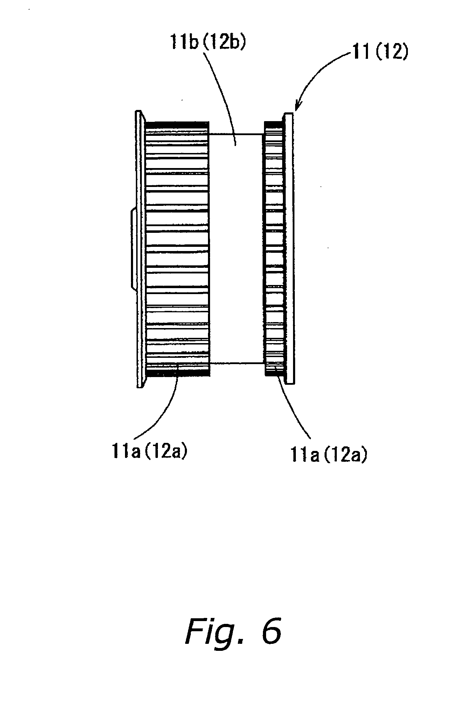

The annular belts 10 and the first and second pulleys 11 and 12 are configured to move in synchronization as bumps formed on the inner surface of the annular belts 10 mate with bumps 11 a and 12a formed on the outer circumference of the first and second pulleys 11 and 12. The outer circumference of each of the first and second pulleys 11 and 12 is disposed with projection avoiding portions 11b and 12b formed by cutting out the bumps 11a and 12a in order to avoid interference with the projections 28 of the filter 13 (see Figure 6).

Note that the reference symbols 31 and 32 represent motors as driving means for rotatingly driving the first pulleys 11 and the second pulleys 12, respectively. In addition, the reference symbol 33 represents the drive axis for synchronously driving the first pulleys 11, 11 on the left and right sides, and the reference symbol 34 represents the drive axis for synchronously driving the second pulleys 12, 12 on the left and right sides.

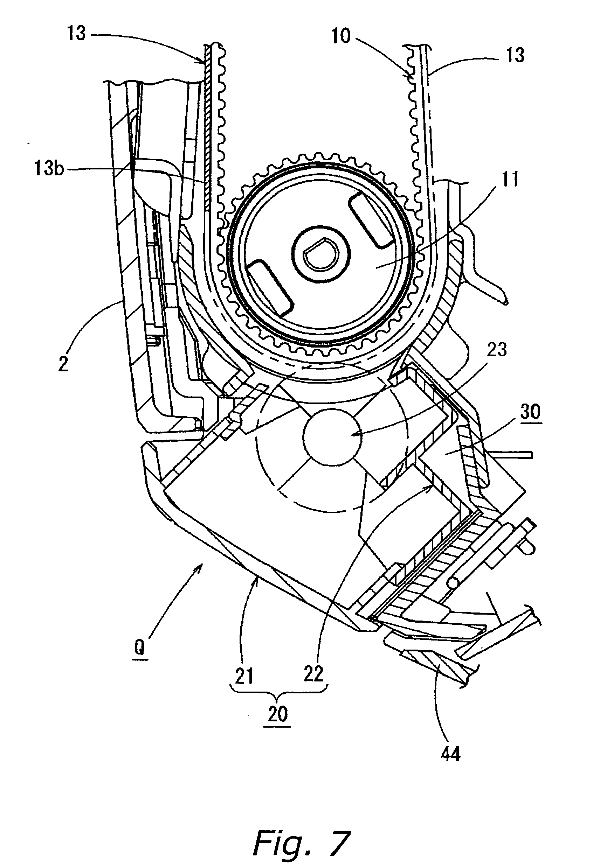

As shown in Figure 7, the brush mechanism Q is removably attached to the housing 30 provided at the front end portion of the bottom wall 1C of the casing 1. The brush mechanism Q is formed by arranging a cleaning brush 23 in the dust box 20 comprising a first box body 21 and a second box body 22. The cleaning brush 23 is rotatingly driven by a brush drive motor (not shown).

### <MOVEMENT OF FILTER AND DUST COLLECTION OPERATION ALONG THEREWITH>

As shown in Figures 2 and 3, the basic arrangement of the filter 13 is such that its upper end is located at the upper end portion of the cleaning unit casing 14, and its lower end is located in the vicinity of the first pulley 11. This arrangement represents the position of the filter 13 during a normal air conditioning operation, and this position is referred to as a "first filter position" below.

During a cleaning operation to clean the filter 13, the first and second pulleys 11 and 12 rotate in the normal direction, and the annular belts 10 run in the direction of arrow b (see Figure 2). Thereby, the filter 13 moves from the "first filter position" along with the annular belts 10 as shown by the two-dot chain lines in Figure 7, rotates externally around the first pulleys 11, moves to the back sides of the second pulleys 12, and further moves upward of the second pulleys 12. The position of the filter 13 after being moved as a result of rotation of the first and second pulleys 11 and 12 in the normal direction is referred to as a "second filter position" below.

Then, the first and second pulleys 11 and 12 rotate in the reverse direction, and the annular belts 10 run in the direction of arrow a (see Figure 2). Thereby the filter 13 is returned to the "first filter position" from the "second filter position" along with the annular belts 10.

In this way, when the filter 13 reciprocates between the "first filter position" and the "second filter position", the brush mechanism Q wipes off the dust collected on the surface of the filter 13, and the dust collection function of collecting dust on the filter 13 is demonstrated.

### <FUNCTION OF FILTER PUSHER DURING MOVEMENT OF FILTER>

As described above, the filter 13 reciprocates between the "first filter position" and the "second filter position". It was assumed at the time of designing of the indoor unit that the filter 13 could not move smoothly because the filter 13 would sag during reciprocation (in particular, during rotation in which the filter 13 moves around the first pulleys 11) and a portion of the filter 13 would get caught by the front-back guide portions 43B of the filter pusher 43 which act as the filter guides.

Therefore, in the indoor unit of the air conditioner according to the present embodiment, as described above, the catch prevention members R are formed in the front-back guide portions 43B of the filter pusher 43. This produces an effect that prevents the center portion 27B of each filter function unit in the filter moving direction of the filter 13 from bulging too much, which otherwise tends to sag outwardly and bulge when moving and rotating about 180 degrees or so around the first pulleys 11. Such an effect is produced because the front-back guide portions 43B is configured such that the catch prevention members R first come into contact with the both side portions 27A of each filter function unit in the filter moving direction, and push down the bulges of the both side portions 27A in the filter moving direction, thereby reducing the size of the bulge of the center portion 27B in the filter moving direction, and by the time when the center portion 27B in the filter moving direction subsequently comes into contact with the front-back guide portions 43B, the center portion 27B in the filter moving direction will be in a form in which the center portion 27B in the filter moving direction does not get caught by the front-back guide portions 43B (the bulge is small). In other words, the front-back guide portions 43B including the catch prevention members R correct sagging of the center portion 27B in the filter moving direction by guiding the both side portions 27A in the filter moving direction of the filter 13 before the center portion 27B in the filter moving direction, thus allowing smooth movement of the filter 13.

Note that, when the filter 13 moves from the "first filter position" to the "second filter position", the catch prevention members R of the lower front-back guide portion 43B of the filter pusher 43 perform the above described catch prevention function, whereas when the filter 13 moves from the "second filter position" to the "first filter position", the catch prevention members R of the upper front-back guide portion 43B of the filter pusher 43 perform the above described catch prevention function.

### <ALTERNATIVE EMBODIMENT 1>

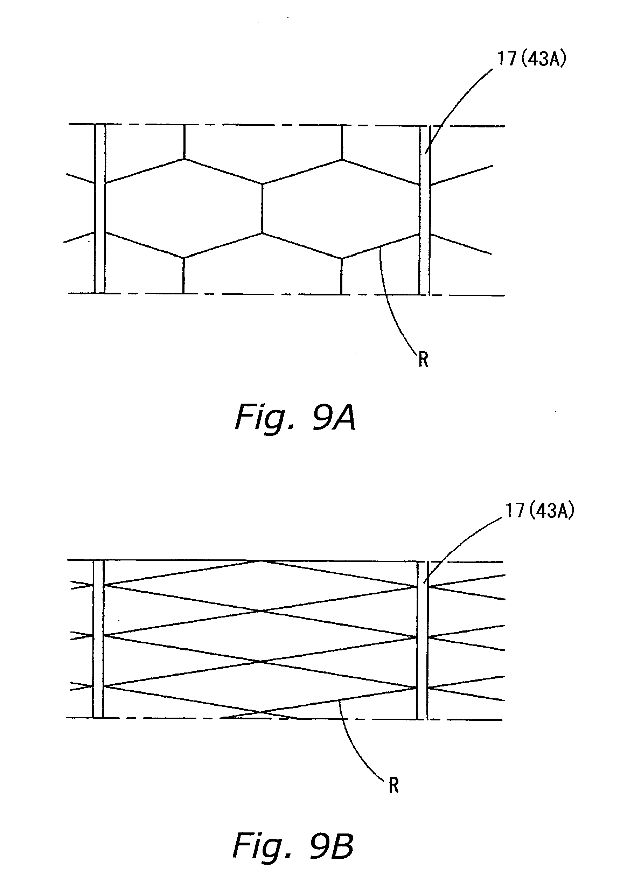

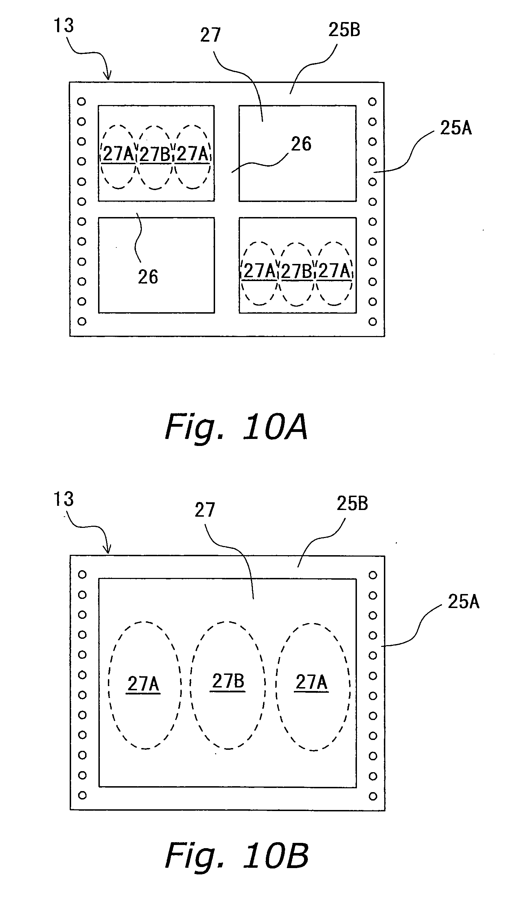

In the above embodiment, the catch prevention members R are formed in the front-back guide portions 43B of the filter pusher 43, however, when the filter 13 as shown in Figure 10A is employed, a filter pusher having bars R formed as shown in Figure 9A as the catch prevention members is used.

Here, as shown in Figure 10A, the grille bars 26 of the filter 13 are modified and there are four filter function units. Additionally, in the filter pusher shown in Figure 9A, the bars R that extend between the upwardly and downwardly extending bars 17 or the left-right guide portions 43A form hexagonal shapes. In this case, the bars R that are inclined when viewed from the front perform the function as the catch prevention members.

### <ALTERNATIVE EMBODIMENT 2>

In the above embodiment, the catch prevention members R are formed in the front-back guide portions 43B of the filter pusher 43, however, when the filter 13 as shown in Figure 10B is employed, a filter pusher having the bars R formed as shown in Figure 9B as the catch prevention members is used.

Here, as shown in Figure 10B, the filter 13 does not include the grille bars 26 and the filter 13 includes only one filter function unit. Additionally, in the filter pusher shown in Figure 9B, the bars R that extend between the upwardly and downwardly extending bars 17 or the left-right guide portions 43A are arranged obliquely. In this case, the bars R perform the function as the catch prevention members.

### <ALTERNATIVE EMBODIMENT 3>

In the above embodiment, the driving means comprising the pulleys 11 and 12 and the annular belt 10 is employed to reciprocate the filter 13, however, the present invention is not limited thereto, and rack and pinion driving means can be employed.

## Claims

1. An air conditioner, comprising:
an air conditioning mechanism (X) including a heat exchanger (7) and a fan (8) disposed in a ventilation passage (5) extending from a suction port (3) to a discharge port (4), the suction port being formed across the area from the front side of a casing (1) to the upper side thereof, and the discharge port being formed at the bottom side of the casing;
a cleaning mechanism (Y) configured to remove dust adhering to the surface of a sheet-like filter (13) arranged capable of moving along the suction port by moving the filter from a position where a specific filter function is demonstrated, and subsequently to return the filter to the position where the specific filter function is demonstrated; and
filter guides (14, 43) configured to guide the movement of the filter,
wherein
the filter includes a filter member (27) and support portions (25A, 25B, 26) configured to support the filter member, and has one or a plurality of filter function units formed thereto, the filter function unit being the filter member surrounded by the support portions, and
the filter guides (14, 43) are provided with a catch prevention member (R) configured to guide both side portions (27A) of the filter function unit in the filter
moving direction.

2. The air conditioner according to claim 1, wherein
the filter guide (43) includes a guide portion (43B) configured such that both side portions (27A) of the filter function unit in the filter moving direction are guided before a center portion (27B) of the filter function unit in the filter moving direction, and the catch prevention member (R) is a part of the guide portion (43B).

3. The air conditioner according to claim 2, wherein
the catch prevention member (R) of the guide portion (43B) has a curved surface, and the guide portion (43B) has a U-shaped surface including the curved surface.

4. The air conditioner according to claim 1, wherein
the filter guide (43) includes a plurality of guide portions (17, 43A) arranged along
the filter moving direction, and
the catch prevention member (R) is a bar that extends in a direction crossing the filter moving direction and connects the plurality of guide portions.
